(19) Europäisches Patentamt
European Patent Office
Office européen des brevets

(11) EP 4 411 854 A1

(12) **EUROPEAN PATENT APPLICATION**
published in accordance with Art. 153(4) EPC

(43) Date of publication:
**07.08.2024 Bulletin 2024/32**

(21) Application number: **22875874.4**

(22) Date of filing: **16.09.2022**

(51) International Patent Classification (IPC):
***H01M 4/13** (2010.01)* ***H01M 4/62** (2006.01)*

(52) Cooperative Patent Classification (CPC):
**H01M 4/13; H01M 4/62**

(86) International application number:
**PCT/JP2022/034671**

(87) International publication number:
**WO 2023/054003 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159595**

(71) Applicant: **Panasonic Intellectual Property Management Co., Ltd.**
**Kadoma-shi, Osaka 571-0057 (JP)**

(72) Inventor: **TOKUDA, Yuki**
**Kadoma-shi, Osaka 571-0057 (JP)**

(74) Representative: **Novagraaf International SA**
**Chemin de l'Echo 3**
**1213 Onex, Geneva (CH)**

# (54) ELECTRODE FOR SECONDARY BATTERIES, AND SECONDARY BATTERY

(57) The disclosed electrode for a secondary battery includes a current collector, and an active material layer disposed on a surface of the current collector. The active material layer includes at least an active material and an organic compound containing bromine. When the active material layer is divided into a first region and a second region having the same thickness, and the first region is closer to the current collector than the second region, a content $A_1$ by mass of the organic compound relative to the active material in the first region is larger than a content $A_2$ by mass of the organic compound relative to the active material in the second region. According to the present disclosure, the deterioration in cycle characteristics at low temperatures in a secondary battery can be suppressed.

*FIG. 1*

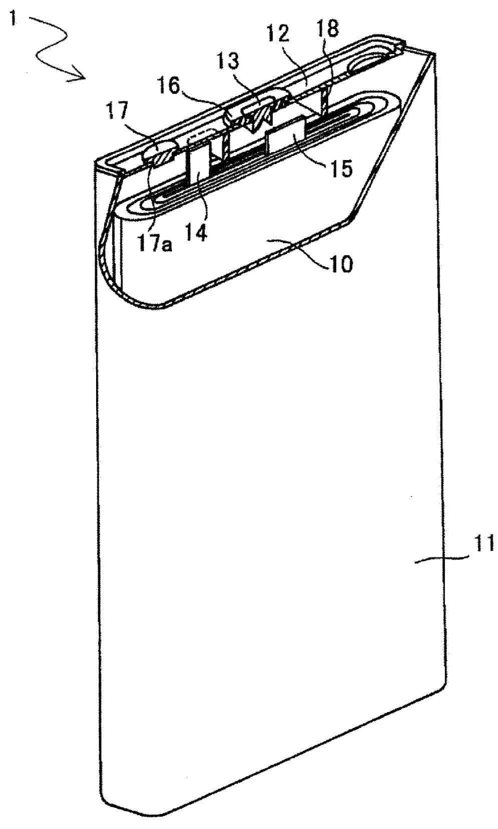


EP 4 411 854 A1

## Description

[Technical Field]

The present disclosure relates to an electrode for a secondary battery, and a secondary battery using the same.

[Background Art]

Nonaqueous electrolyte secondary batteries, especially lithium-ion secondary batteries, have high output and high energy density. Therefore, nonaqueous electrolyte secondary batteries are utilized as a power source for small consumer applications, power storage devices, and electric cars.

Patent Literature 1 proposes using a positive electrode in which a halogen-substituted cyclic organic compound substituted by one or more chlorine or bromine atoms is added to a positive electrode active material mainly composed of a lithium-transition metal composite oxide, thereby to suppress the oxidative decomposition of liquid electrolyte at the interface with the lithium-transition metal composite oxide in a charged state, and reduce the increase in internal resistance during storage at high temperatures.

Patent Literature 2 proposes using a positive electrode body having a positive electrode current collector and a positive electrode layer containing a positive electrode active material formed on the positive electrode current collector, in which a decomposition inhibitor, such as a metal oxide, for inhibiting the decomposition of an organic electrolyte is added to the positive electrode layer, and the concentration of the decomposition inhibitor at a current collector-side surface of the positive electrode layer is set higher than that at a surface thereof opposite the current collector side-surface, thereby to efficiently suppress the decomposition of the organic electrolyte and improve the cycle characteristics.

[Citation List]

[Patent Literature]

Patent Literature 1: Japanese Laid-Open Patent Publication No. 2000-58068
Patent Literature 2: Japanese Laid-Open Patent Publication No. 2009-64715

[Summary of Invention]

[Technical Problem]

It is known that the cycle characteristics of a nonaqueous electrolyte secondary battery are also affected by the temperature at which the secondary battery is used. Although the technique disclosed in Patent Literature 2 mentions the improvement in cycle characteristics, improvement is still possible with respect to the suppression of deterioration in cycle characteristics of a secondary battery at low temperatures.

[Solution to Problem]

One aspect of the present disclosure relates to an electrode for a secondary battery. The electrode for a secondary battery includes: a current collector; and an active material layer disposed on a surface of the current collector, wherein the active material layer includes at least an active material and an organic compound containing bromine, and when the active material layer is divided into a first region and a second region having the same thickness, and the first region is closer to the current collector than the second region, a content $A_1$ by mass of the organic compound relative to the active material in the first region is larger than a content $A_2$ by mass of the organic compound relative to the active material in the second region.

Another aspect of the present disclosure relates to a secondary battery, including: a first electrode which is the above-described electrode for a secondary battery; a second electrode; and a separator interposed between the first electrode and the second electrode.

[Advantageous Effects of Invention]

According to the present disclosure, the deterioration in cycle characteristics at low temperatures in a secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[FIG. 1] A partially-cutaway schematic oblique view of a secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

(Electrode for secondary battery)

An electrode for a secondary battery according to the present embodiment includes a current collector and an active material layer disposed on a surface of the current collector. The active material layer includes at least an active material and an organic compound containing bromine. In the following, an organic compound containing bromine is sometimes referred to as a "bromine compound (B)."

When a bromine compound (B) is included in the active material layer, the wettability of liquid electrolyte with the active material is improved. Thus, the cycle characteristics of a secondary battery using the electrode for a secondary battery can be improved.

On the other hand, in order to increase the energy density of a secondary battery, attempts have been made to compress an electrode including an active material layer (e.g., by rolling), so that the active material density in the active material layer can be increased. In this case, since the bromine compound (B) is soft as compared to the active material, the bromine compound (B) present in the electrode surface layer will be easily compressed in the compressing process of the electrode. This causes occlusion of the voids in the electrode surface layer with the bromine compound (B), which may inhibit the flow of liquid electrolyte within the electrode. In a low temperature environment, as compared to in room temperature, the fluidity of liquid electrolyte itself decreases in some cases, and as a result, in the thickness direction of the electrode, in a region closer to the current collector than in the surface layer, charge-discharge reactions tend to be inhibited, tending to cause the cycle characteristics at low temperatures to deteriorate.

In the electrode for a secondary battery according to the present embodiment, when the active material layer is divided into a first region and a second region having the same thickness, and the first region is closer to the current collector than the second region, a content $A_1$ of the bromine compound (B) relative to the active material in the first region is larger than a content $A_2$ of the bromine compound (B) relative to the active material in the second region. That is, in the electrode for a secondary battery according to the present embodiment, a content $A_3$ of the bromine compound (B) identified at a surface of the electrode on the current collector side is higher than a content $A_4$ of the bromine compound (B) identified at a surface of the electrode on the separator side. The contents $A_1$ to $A_4$ of the bromine compound (B) are the contents by mass relative to the active material.

The content of the bromine compound (B) in the second region on the surface side of the electrode is reduced, and therefore, the decrease in the fluidity of liquid electrolyte within the electrode can be suppressed. As a result, the fluidity of liquid electrolyte within the electrode is ensured, and thus, the effect by the bromine compound (B) of improving the cycle characteristics can be exhibited even when the secondary battery is used in a low temperature environment where the fluidity of liquid electrolyte itself decreases.

The electrode for a secondary battery can be obtained by, for example, forming a first layer containing an active material and a bromine compound (B) on a current collector, and then, forming a second layer containing at least the active material on the first layer. The first layer and the second layer may not have the same thickness. That is, the boundary between the first layer and the second layer may not coincide with the boundary between the first region and the second region. As long as the content of the bromine compound (B) in the first layer is higher than that in the second layer, when a whole of first and second layers is divided into a first region and a second region having the same thickness, the content $A_1$ of the bromine compound (B) in the first region is larger than the content $A_2$ of the bromine compound (B) in the second region. The electrode for a secondary battery may have a laminated structure of three or more active material layers with different contents of the bromine compound (B), in which the content of the bromine compound (B) may be set lower in a layer as farther away from the current collector. Alternatively, the content of the bromine compound (B) in the active material layer may be continuously varied such that it becomes lower as farther away from the current collector.

The content $A_2$ of the bromine compound (B) in the second region may be 0.5 times or less as large as the content $A_1$ of the bromine compound (B) in the first region ($A_2/A_1$ is 1/2 or less), more preferably 0.25 times or less ($A_2/A_1$ is 1/4 or less). The content $A_4$ of the bromine compound (B) identified at the surface of the electrode on the separator side may be 0.5 times or less as large as the content $A_3$ of the bromine compound (B) identified at the surface of the electrode on the current collector side ($A_4$/ $A_3$ may be 1/2 or less), more preferably 0.25 times or less ($A_4/A_3$ is 1/4 or less), and the bromine compound (B) may not be identified at the surface of the electrode on the separator side. When the $A_1$ and the $A_2$ satisfy such a relationship, the inhibition of charge-discharge reactions in the first region can be effectively suppressed, and high cycle characteristics can be maintained even at low temperatures.

The first region may not substantially contain the bromine compound (B) in a region of the surface layer at a predetermined depth from the surface of the electrode for a secondary battery. For example, the electrode for a secondary battery may contain no bromine compound (B) in a region to a depth of at least 1/4 of the thickness of the whole active material layer from the surface not facing the current collector of the active material layer. In this case, the inhibition of charge-discharge reactions in the first region can be significantly suppressed, and high cycle characteristics can be maintained even at low temperatures. The thickness of the region containing no bromine compound (B) of the surface layer may be 1/3 or more, or 1/2 or more as large as the thickness of the whole active material layer.

Here, a certain region "containing no bromine compound (B)" means that the content of the bromine compound (B) in that region is 0.02 parts by mass or less relative to 100 parts by mass of the active material.

When the mass ratio of the active material to the bromine compound (B) in the active material layer is expressed as active material: bromine compound (B) = 100 : a, the a is preferably 0.1 or more and 1.5 or less. More preferably, the a may be 0.1 or more and 1.0 or less, 0.1 or more and 0.75 or less, 0.15 or more and 0.75 or less, or 0.35 or more and 0.75 or less. The a represents a ratio of the bromine compound (B) contained in the whole active material layer to the active material, and is a value obtained by averaging the contents of the bromine compound (B) in the first region and the second region. When the a is 0.1 or more, the effect of improving the cycle characteristics by the bromine compound (B) can be sufficiently obtained, and since the content of the bromine compound (B) in the second region is reduced, the deterioration in cycle characteristics at low temperatures can be suppressed. When the a is 1.5 or less, the increase in internal resistance due to the addition of the bromine compound (B) can be suppressed.

The electrode for a secondary battery may be a positive electrode or a negative electrode. When the electrode for a secondary battery is a positive electrode, the active material is a positive electrode active material, and the active material layer is a positive electrode active material layer. When the electrode for a secondary battery is a negative electrode, the active material is a negative electrode active material, and the active material layer is a negative electrode active material layer. According to the present embodiment, when the bromine compound (B) is added, together with the positive or negative electrode active material, to either the positive or negative electrode active material layer, the content of the bromine compound (B) is reduced to be lower on the electrode surface side than on the current collector side, the effect of improving cycle characteristics by the bromine compound (B) can be maximized, and the deterioration in cycle characteristics at low temperatures can be suppressed.

(Method for producing electrode for secondary battery)

The electrode for a secondary battery according to the present embodiment can be produced by, for example, a method including steps of preparing a current collector, and disposing an active material layer on a surface of the current collector. The step of disposing an active material layer includes a step of forming a first layer containing at least an active material and an organic compound containing bromine on a surface of the current collector, and a step of forming a second layer containing at least the active material on the first layer.

The formation of a first layer is performed by, for example, applying a slurry containing an active material and a bromine compound (B) onto a current collector, followed by drying. The formation of a second layer is performed by, for example, applying a slurry containing at least the active material onto the first layer, followed by drying. The slurry

used for forming a second layer may also contain the bromine compound (B). However, the content of the bromine compound (B) in the slurry used for forming a second layer is set smaller than that in the slurry used for forming a first layer, so that the content of the bromine compound (B) in the second layer can be smaller than that in the first layer.

The second layer may be formed using a slurry containing no bromine compound (B). In this case, a second layer that does not substantially contain the bromine compound (B) can be formed on the electrode surface layer.

The method may further include a step of, after forming the second layer, compressing the active material layer. The compressing can be performed by, for example, rolling the electrode having the active material layer disposed thereon. By the compressing, the density of the active material in the electrode is increased, and high capacity is more likely to be realized.

During the compressing, the surface side of the active material layer that does not face the current collector tends to undergo a large compressive force, while the compressive force is likely to be relaxed on the current collector side of the active material layer. As a result, the second layer of the active material layer is readily compressed, and the first layer is hardly compressed. In addition, when the active material layer contains a bromine compound (B), the bromine compound (B) is selectively deformed by the compressing, tending to cause occlusion of the voids in the active material layer.

However, according to the production method according to the present embodiment, since the content of the bromine compound (B) in the second layer is reduced, even when the active material layer is compressed, the occlusion of the voids in the second layer is suppressed. Therefore, the flow of the liquid electrolyte into the first layer is unlikely to be inhibited, and the cycle characteristics (esp., cycle characteristics at low temperatures) can be maintained high.

Three or more kinds of electrode slurries may be used to form three or more layers having different contents of the bromine compound (B) laminated together, to form an active material layer. In this case, in the laminated structure, the content of the bromine compound (B) may be set smaller as farther away from the current collector.

(Bromine compound (B))

The bromine compound (B) acts to increase the wettability of liquid electrolyte with the active material and improve the cycle characteristics. The bromine compound (B) is adhering to the particles of the active material. The particle diameter of the bromine compound (B) may be 0.5 μm to 10 μm. The particle diameter of the bromine compound (B) is calculated by image analysis of a cross section of the active material layer, as described later.

The bromine compound (B) may include a cyclic structure bonded with a bromine atom (Br). The cyclic structure may or may not be an aromatic ring. In this case, all the bromine atoms (Br) may be bonded to the cyclic structure, or some of the bromine atoms (Br) only may be bonded to the cyclic structure. The structure in which a bromine atom (Br) is bonded to a cyclic structure is preferable in that the bromine atom content in the compound can be easily increased.

The bromine atom (Br) proportion in the bromine compound (B) is preferably 45 mass% or more. The proportion may be 60 mass% or more (e.g., 70 mass% or more). The upper limit is not limited to a particular value, and may be 95 mass% or less (e.g., 90 mass% or less). These lower and upper limits can be combined in any combination. Such a bromine compound (B) has many bromine atoms, and with the bromine compound (B) having many bromine atoms, the wettability of liquid electrolyte to the active material is further improved, and the improvement effect of the cycle characteristics is enhanced.

Note that such a bromine compound (B) exhibits a flame-retardant effect by releasing bromine atoms (Br) at high temperatures, and may also have an effect of suppressing excessive heat generation in the secondary battery. By using an electrode for a secondary battery containing the bromine compound (B) in the active material layer, excessive heat generation in the event of abnormality of the secondary battery can be suppressed.

The bromine compound (B) may be, for example, at least one selected from the group consisting of ethylene-1,2-bispentabromophenyl, ethylenebistetrabromophthalimide, tetrabromobisphenol A, hexabromocyclododecane, and 2,4,6-tribromophenol. These bromine compounds (B) may be commercially available ones. Alternatively, the bromine compound (B) may be synthesized by a known synthesis method.

The structural formula of ethylene-1,2-bispentabromophenyl, which is an example of the bromine compound (B), is shown below. The molecular weight of ethylene-1,2-bispentabromophenyl is 971.2, which contains 10 bromine atoms (atomic weight: 79.9). Therefore, the bromine atom (Br) proportion in ethylene-1,2-bispentabromophenyl is calculated as $100 \times 10 \times 79.9 / 971.2 = 82.3$ mass%.

[Chem. 1]

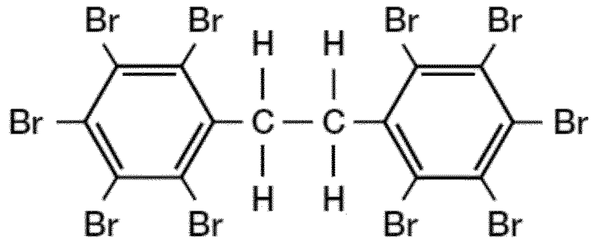

In addition, such a bromine compound (B) containing bromine atoms (Br) has a high specific gravity, and therefore, the volume can be reduced relative to its added weight. Therefore, while ensuring a sufficient amount of the bromine compound (B), the loading amount of the active material can be maintained high, and thus, a high capacity can be maintained. With a halogen atom (Ha) bonded to its cyclic structure, the bromine compound (B) can easily have an increased specific gravity. The specific gravity of the bromine compound (B) may be, for example, 2.7 or more, and preferably is 3.0 or more.

The bromine compound (B) preferably does not contain a moiety that generates moisture and/or a hydrophilic group in the structure of the compound. In this case, moisture hardly enters the battery during the manufacturing process of a secondary battery, and a highly reliable secondary battery can be realized. Examples of the moiety that generates moisture include a hydroxy group (-OH), a carboxyl group (-COOH), a carbonyl group (-CO-), and an oxoacid group, such as sulfo group and phosphoric acid group. Examples of the hydrophilic group include, in addition to the above-mentioned functional groups, an amino group, and the like.

When the electrode for a secondary battery is used as a negative electrode, and a later-described negative electrode active material containing silicon (Si) is used as an active material, the bromine atom (Br) contained in the bromine compound (B) can react with Si, to form a stable film on the surface of the negative electrode active material. Thus, higher cycle characteristics can be maintained, and high durability can be expected.

The content of the active material in the active material layer can be determined using a sample obtained by taking out the positive electrode active material layer only, from a secondary battery in a discharged state. Specifically, first, a secondary battery in a discharged state is disassembled, to take out an electrode. Next, the electrode is washed with an organic solvent, and dried under vacuum, from which only the active material layer is peeled and separated, to obtain a sample. By subjecting the sample to thermal analysis, such as TG-DTA, the ratio of the components other than the active material, i.e., the binder component and the conductive material component, can be calculated. The content of the bromine compound (B) in the active material layer can be determined by elemental analysis, such as EDS, on a cross section of the active material layer.

The particle diameter of the bromine compound (B) is an average particle diameter determined by observing a cross section of the active material layer and performing image processing. The cross section may be prepared using a cross section polisher (CP). The diameter of a circle (equivalent circle diameter) having the same area as the area of the cross section of a particle of the bromine compound (B) (the area of a particle observed in the cross section of the active material layer) is determined, and the average value of the equivalent circle diameters is calculated as the particle diameter of the bromine compound (B). Ten or more particles are observed, to determine the largest diameter.

(Secondary battery)

A secondary battery according to the present embodiment includes a first electrode which is the above-described electrode for a secondary battery, a second electrode, and a separator interposed between the first electrode and the second electrode. In the following, the secondary battery according to the present embodiment is sometimes referred to as a "secondary battery (S)". One of the first electrode and the second electrode is a positive electrode, and the other is a negative electrode.

Of the first and second electrodes, at least the first electrode is the above-described electrode for a secondary battery containing a bromine compound (B). The first electrode may be a positive electrode, and the second electrode may be a negative electrode. Conversely, the first electrode may be a negative electrode, and the second electrode may be a positive electrode. That is, the positive electrode of the secondary battery (S) may be constituted of the above-described electrode for a secondary battery, or the negative electrode of the secondary battery (S) may be constituted of the above-described electrode for a secondary battery. Both the positive electrode and the negative electrode may be constituted of the above-described electrode for a secondary battery. The following describes the configuration of the secondary battery (S), by way of an example where the above-described electrode for a secondary battery is used as the positive electrode of the secondary battery (S).

In the following, an example of the secondary battery (S) according to the present embodiment and examples of its constituent elements will be described in detail. Note that, for the constituent elements that are not characteristic of the present disclosure, known constituent elements may be adopted. The secondary battery (S) includes, for example, an outer body (battery case), and a positive electrode, a negative electrode, a nonaqueous electrolyte, and a separator, which are housed in the outer body. The separator is disposed between the positive electrode and the negative electrode. The secondary battery may be a nonaqueous electrolyte secondary battery.

The shape of the secondary battery (S) is not limited, and may be cylindrical, prismatic, coin-shaped, button-shaped, or the like. The battery case is selected according to the shape of the secondary battery (S).

[Negative electrode]

The negative electrode contains a negative electrode mixture. Typically, the negative electrode includes a negative electrode current collector, and a negative electrode active material layer (negative electrode mixture layer) disposed on a surface of the negative electrode current collector. The negative electrode active material layer contains a negative electrode active material, and contains, as necessary, a bromine compound (B) and other components other than the negative electrode active material and the bromine compound (B). Examples of other components include a binder, a conductive agent, and a thickener. For these other components, known components used in a secondary battery may be used.

The negative electrode active material layer can be formed by applying a negative electrode slurry of a negative electrode mixture dispersed in a dispersion medium onto a surface of a negative electrode current collector, to form an applied film, and then, drying the applied film. The dry applied film may be rolled as necessary. Examples of the dispersion medium include water, alcohols, ethers, N-methyl-2-pyrrolidone (NMP), and mixed solvents thereof. The ratio of the components in the negative electrode mixture can be adjusted by changing the mixing ratio of the materials of the negative electrode mixture.

As the negative electrode current collector, a non-porous electrically conductive substrate (e.g., metal foil), a porous electrically conductive substrate (e.g., mesh, net, punched sheet), and the like can be used. The material of the negative electrode current collector may be, for example, stainless steel, nickel, a nickel alloy, copper, a copper alloy, and the like.

[Negative electrode active material]

As the negative electrode active material, a material capable of electrochemically absorbing and releasing lithium ions is preferably used. Examples of such a material include a carbonaceous materials, and a Si-containing material. The negative electrode active material may be used singly, or in combination of two or more kinds.

Examples of the carbonaceous material include graphite, graphitizable carbon (soft carbon), and non-graphitizable carbon (hard carbon). The carbonaceous material may be used singly, or in combination of two or more kinds. In particular, in terms of its excellent stability during charge and discharge and small irreversible capacity, graphite is preferred as the carbonaceous material. Examples of the graphite include natural graphite, artificial graphite, and graphitized mesophase carbon particles. As the graphite, known graphite used as a negative electrode active material may be used.

Graphite means a material with a developed graphite-like crystal structure, and generally refers to a carbon material having an average interplanar spacing $d_{002}$ of the (002) plane as measured by X-ray diffractometry of 0.340 nm or less.

Examples of the Si-containing material include elementary Si, a silicon alloy, and a silicon compound (e.g., silicon oxide), and a composite material containing a lithium-ion conductive phase (matrix) and a silicon phase dispersed therein. The silicon oxide is exemplified by $SiO_x$ particles. The x is, for example, $0.5 \leq x < 2$, and may be $0.5 \leq x < 1.6$, or $0.8 \leq x \leq 1.6$. As the lithium-ion conductive phase, at least one selected from the group consisting of a $SiO_2$ phase, a silicate phase, and a carbon phase can be used.

As an example of the Si-containing material, at least one kind of particles (P) may be used which is selected from the group consisting of: first particles containing a silicon oxide represented by a formula SiOx, where $0.5 \leq X < 1.6$; second particles containing a lithium silicate phase and silicon particles dispersed in the lithium silicate phase; and third particles containing a carbon phase and silicon particles dispersed in the carbon phase. Note that in the present specification, the silicon particles contained in the second particles can be rephrased as a silicon phase, and the silicon particles contained in the third particles can be rephrased as a silicon phase.

By using the particles (P) containing silicon (Si) as a negative electrode active material, the battery capacity can be increased.

The negative electrode active material may include a plurality of kinds of particles selected from the group consisting of the first particles, the second particles, and the third particles. For example, the particles (P) may be

constituted of two kinds of particles selected from these, or may include all these three kinds of particles. Specifically, the negative electrode active material may include the first particles and the second particles, may include the first particles and the third particles, and may include the second particles and the third particles. The negative electrode active material may include all of the first, second, and third particles. The particles (P) are preferably used as a negative electrode active material in combination with graphite.

When the negative electrode active material contains graphite and the particles (P), the content of the particles (P) in the negative electrode active material may be 1 mass% or more. According to this configuration, it is possible to achieve higher capacity as compared to that achieved when the negative electrode active material comprises graphite only. The content of the particles (P) in the negative electrode active material may be 3 mass% or more. The above content may be 50 mass% or less. These lower and upper limits can be combined in any combination as long as no contradiction arises.

The graphite content in the negative electrode active material may be in the range of 50 to 99 mass%. Note that when the particles (P) contain graphite on the surface and/or inside thereof, the graphite is not included in the above content of graphite. The graphite content is a content of the graphite not contained in the particles (P).

[First particles]

The first particles contain a silicon oxide represented by a formula SiOx, where $0.5 \leq X < 1.6$. The first particles may include silicon oxide particles and a carbon layer disposed around the silicon oxide particles.

The average particle diameter of the first particles may be in the range of 1 μm to 25 μm (e.g., in the range of 4 μm to 15 μm).

[Second particles]

The second particles contain a lithium silicate phase and silicon particles dispersed in the lithium silicate phase. The lithium silicate phase may include a lithium silicate represented by a formula $Li_{2Z}SiO_{(2+Z)}$, where $0 < Z < 2$, or may be constituted of the above lithium silicate. Preferably, Z satisfies $0 < Z < 1$. In the lithium silicate phase, 50 mass% or more (e.g., 60 mass% or more) may be constituted of a lithium silicate satisfying $0 < Z \leq 0.5$.

The second particles may contain at least one element Me dispersed in the lithium silicate phase. The at least one element Me is at least one element selected from the group consisting of a rare earth element and an alkaline earth metal element. Examples of the alkaline earth metal element include Mg, Ca, Sr, and Ba.

The element Me may be dispersed as an Me oxide in the lithium silicate phase. The Me oxide may include at least one selected from the group consisting of an yttrium oxide, a cerium oxide, a calcium oxide, and a magnesium oxide. The lithium silicate phase may include zirconium oxide. The element Me may be dispersed in the zirconium oxide.

The amount of the element Me contained in the second particles can be measured as an amount calculated assuming that the element Me forms a stoichiometric oxide (presumed Me oxide amount), regardless of the state of the element Me or the type of a compound of the element Me. The presumed Me oxide amount may be in the range of 0.001 mass% to 1.0 mass%, relative to the sum of the lithium silicate phase and silicon particles. By setting the presumed Me oxide amount to 0.001 mass% by mass or more, the reaction area can be reduced, and the effect of improving the hardness of the lithium silicate phase can be increased. On the other hand, by setting the presumed Me oxide amount to 1.0 mass% or less, the decrease of the initial capacity can be suppressed.

The lithium silicate phase may include a metal compound, such as a metal oxide, a metal carbide, a metal nitride, and a metal boride. Preferred metal compounds are a metal oxide and a metal carbide. In particular, at least one selected from the group consisting of zirconium oxide ($ZrO_2$), aluminum oxide ($Al_2O_3$), zirconium carbide (ZrC), tungsten carbide (WC), and silicon carbide (SiC) is preferably used. The amount of the compound of a metal element other than the element Me is in the range of 0.005 mass% to 15 mass%, relative to the sum of the lithium silicate phase and the silicon particles (e.g., in the range of 0.01 mass% to 10 mass%, in the range of 0.01 mass% to 1 mass%). The amount of the compound of a metal element can be determined, in a manner similar to that for the content to the element Me, as an amount calculated assuming that the metal element is forming a stoichiometric oxide.

The average particle diameter of the second particles may be in the range of 1 μm to 25 μm (e.g., in the range of 4 μm to 15 μm). In such a range, the stress caused by changes in volume of the second particles during charging and discharging can be readily relaxed, and the cycle characteristics are likely to be favorable. Furthermore, the surface area of the second particles becomes appropriate, and the reduction in capacity due to side reactions with nonaqueous electrolyte is also suppressed.

The crystallite size of the silicon particles dispersed in the lithium silicate phase is, for example, 10 nm or more. The silicon particles have a particulate phase of elementary silicon (Si). When the crystallite size of the silicon particles is set to 10 nm or more, the surface area of the silicon particles can be suppressed small, and therefore, the deterioration of the silicon particles is unlikely to occur that is accompanied by the generation of irreversible capacity. The crystallite

size of the silicon particles is calculated from the half-width of a diffraction peak attributed to the Si (111) plane of an X-ray diffraction (XRD) pattern of the silicon particle using the Scherrer's equation.

The average particle diameter of the silicon particles in the second particles may be preferably 500 nm or less (more preferably 200 nm or less, still more preferably 50 nm or less) before the first charging. After the first charging, the average particle diameter of the silicon particles is preferably 400 nm or less (more preferably 100 nm or less). By making the silicon particles finer, the changes in volume during charging and discharging are reduced, leading to further improved structural stability of the second particles.

The content of the silicon particles (elementary Si) in the second particles is preferably in the range of 20 mass% to 95 mass% (e.g., in the range of 35 mass% to 75 mass%), in view of achieving higher capacity and improving the cycle characteristics. Within this range, the diffusibility of lithium ions is also improved, likely to leading to excellent load characteristics. Furthermore, the surfaces of the silicon particles exposed without being covered with the lithium silicate phase are decreased, leading to suppressed side reactions between the nonaqueous electrolyte and the silicon particles.

The second particles may contain an electrically conductive material covering at least part of its surfaces. Since the lithium silicate phase is poor in electron conductivity, the electrical conductivity of the second particles also tends to be reduced. By coating the surface with an electrically conductive material, the conductivity can be dramatically enhanced. The conductive layer is preferably thin to the extent that does not substantially affect the average particle diameter of the second particles. For example, in view of ensuring the conductivity and the diffusibility of lithium ions, the thickness of the conductive layer may be in the range of 1 nm to 200 nm (e.g., in the range of 5 nm to 100 nm). Examples of the material and the forming method of the conductive layer will be described later.

[Third particles]

The third particles contain a carbon phase and silicon particles dispersed in the carbon phase. The carbon phase of the third particles may be constituted of shapeless carbon (i.e., amorphous carbon). The amorphous carbon may be hard carbon, soft carbon, or others than these. Shapeless carbon (amorphous carbon) usually refers to a carbon material having an average interplanar spacing $d_{002}$ of the (002) plane as measured by X-ray diffractometry of more than 0.34 nm.

The third particles contain a carbon phase and silicon particles dispersed in the carbon phase. The carbon phase of the third particles has electrical conductivity. Therefore, even with gaps formed around the third particles, the contacts of the third particles with their surroundings are likely to be maintained. As a result, the capacity reduction due to repeated charge-discharge cycles is likely to be suppressed.

The average particle diameter of the third particles may be 3 μm or more and 18 μm or less, may be 6 μm or more and 15 μm or less, and may be 8 μm or more and 12 μm or less.

The content of the silicon particles in the third particles may be 30 mass% or more and 80 mass% or less, and may be 40 mass% or more and 70 mass% or less. Within this range, a sufficiently high capacity of the negative electrode is likely to be achieved, and the cycle characteristics are also likely to be improved.

The average particle diameter of the silicon particles in the third particles may be, for example, 1 nm or more. The average particle diameter of the above silicon particles may be 1000 nm or less, may be 500 nm or less, may be 200 nm or less, and may be 100 nm or less (even 50 nm or less). The finer the silicon particles are, the less the changes in volume of the third particles during charging and discharging are, leading to improved structural stability of the third particles.

The compositions of the second and third particles and the contents of the components therein can be analyzed by the method described in WO2018/179969.

The content of each element in the particles (P) may be measured by, for example, inductively coupled plasma emission spectroscopy (ICP-AES). Specifically, the particles (P) are dissolved in a heated acid solution, followed by filtration to remove the residual carbon in the solution, and then, the resulting filtrate is analyzed by ICP-AES, to measure a spectral intensity of each element. Subsequently, a calibration curve is created using a commercially available standard solution of each element, to calculate a content of each element.

The second particles and the third particles each have a so-called sea-island structure. The silicon particles (islands) in the second particles and those in the third particles are respectively dispersed in a matrix (sea) of the silicate phase and that of the carbon phase, and covered with a lithium-ion conductive phase (silicate phase and carbon phase). In the sea-island structure, the contacts of the silicon particles with the electrolyte are restricted, leading to suppressed side reactions. In addition, the stress associated with expansion and contraction of the silicon particles is relaxed by the matrix of the lithium-ion conductive phase.

The average particle diameter of the graphite (graphite particles) contained as an active material in the negative electrode may be 13 μm or more and 25 μm or less. The average particle diameter of the graphite is preferably larger than that of the particles (P). According to this configuration, gaps are likely to be formed between the relatively large particles of graphite, so that the particles (P) are accommodated in the gaps. Therefore, the packing density of the active

material in the negative electrode is likely to be increased, leading to obtaining a negative electrode with higher capacity. Furthermore, the particles (P) present in the gaps contribute to maintaining the electronic contacts between graphite particles. On the other hand, even when the particles (P) present in the gaps expand or contract, the whole negative electrode hardly expands or contracts, and thus, the deterioration due to repeated charge-discharge cycles is unlikely to occur.

The average particle diameters of the following: the particles (P), the silicon particles in the particles (P), and the graphite, in the negative electrode mixture may be each measured by observing a cross section of the layer formed of the negative electrode mixture using a SEM or TEM. In that case, the average particle diameter is determined as an arithmetic average of the largest diameters of any 100 particles.

The average particle diameter of the particles (P) before forming a negative electrode mixture may be a median diameter (D50) at 50% cumulative volume in a volumetric particle-size distribution measured using a laser diffraction particle size analyzer.

[Method for producing first particles]

The first particles may be produced, for example, by the following method. First, particles having a composition of SiO (silicon monoxide) are pulverized and classified, to adjust the particle size. Next, the surfaces of the obtained particles are coated with carbon by a CVD method in an argon atmosphere. Then, by crushing and classifying the resultant particles, first particles expressed as SiOx are prepared. As a method of coating the SiOx particles with carbon, various known methods can be adopted. The process of coating SiOx particles with carbon may be omitted.

[Method for producing second particles]

Next, an example of the method for producing the second particles will be described in detail. The second particles may be produced by a method other than the method described below. The second particles may be produced by the method described in WO2018/179969.

The second particles are synthesized roughly in two steps: a preliminary step of obtaining a lithium silicate, and a later step of obtaining second particles from the lithium silicate and a raw material silicon. In the case of adding an element Me, the element Me may be added to the raw material of lithium silicate in the preliminary step, but preferably added in the later step so as not to influence the synthesis of a lithium silicate. Specifically, the method of producing second particles preferably includes a step (i) of mixing silicon dioxide and a lithium compound together, and firing the resultant mixture, to obtain a lithium silicate, and a step (ii) of forming the lithium silicate and a raw material silicon (and an element Me, as necessary) into a composite, to obtain second particles containing a lithium silicate phase and silicon particles dispersed in the lithium silicate.

[Step (i)]

The value Z of the lithium silicate represented by the formula: $Li_{2Z}SiO_{2+Z}$ may be controlled by the atomic ratio Li/Si between silicon and lithium in the mixture of silicon dioxide and a lithium compound. In order to synthesize a high-quality lithium silicate with less leaching of alkaline components, it is preferable to set the Li/Si smaller than 1.

As the lithium compound, lithium carbonate, lithium oxide, lithium hydroxide, lithium hydride, and the like can be used. These may be used singly or in combination of two or more kinds.

The mixture containing silicon dioxide and a lithium compound is preferably heated in air at 400 °C to 1200 °C, preferably 800 °C to 1100 °C, to cause reaction between the silicon dioxide and the lithium compound.

[Step (ii)]

Next, the lithium silicate and a raw material silicon are formed into a composite. For example, a mixture of the lithium silicate and a raw material silicon (which may further contain an element Me) is pulverized under application of shearing force thereto. As the raw material silicon, coarse silicon particles of about several $\mu$m to several tens of $\mu$m in average particle diameter may be used. The silicon particles finally obtained are preferably controlled so as to have a crystallite size of 10 nm or more as calculated using the Scherrer's equation from the half width of the diffraction peak attributed to the Si(111) plane of an XRD pattern.

For the material of the element Me used for preparation, an oxide, an oxalate, a nitrate, a sulfate, a halide, a carbonate, and the like of the element Me may be used. Preferred among them is an Me oxide because it is stable and has good ionic conductivity. More specific examples thereof include $CeO_2$, $Sc_2O_3$, $Y_2O_3$, $Er_2O_3$, $Tm_2O_3$, $Yb_2O_3$, and $Lu_2O_3$. Also, a compound containing an element other than the element Me and oxygen, such as yttria-stabilized zirconia, may be used. These may be used singly or in combination of two or more kinds.

For example, the lithium silicate and a raw material silicon (and a compound of an element Me, as necessary) may be mixed in a predetermined mass ratio, and the mixture may be stirred while being pulverized into fine particles, using a pulverizer like a ball mill. The process of forming into a composite is not limited to the above. For example, without using a pulverizer, silicon nanoparticles and lithium silicate nanoparticles (and a compound of an element Me, as necessary) may be synthesized and mixed.

Next, the pulverized mixture is heated and fired, for example, in an inert atmosphere (e.g., an atmosphere of argon, nitrogen, etc.) at 450 °C to 1000 °C. In this process, a sintered body of the mixture may be produced by firing the mixture under application of pressure using a hot press or the like. The lithium silicate is stable at 450 °C to 1000 °C and hardly reacts with silicon, and therefore, a capacity decrease, if any, is very small. During firing, the silicate softens and flows so as to fill the gaps between silicon particles. As a result, a dense block of sintered body containing a silicate phase as a sea and silicon particles as islands can be obtained.

The sintered body is then be pulverized to be a particulate material, which can be used as second particles. In this process, by appropriately selecting the pulverization conditions, second particles having an average particle diameter within the aforementioned range can be obtained.

The step (ii) may be followed by a step (iii) of coating at least part of the surfaces of the second particles with an electrically conductive material, to form a conductive layer. The conductive material is preferably electrochemically stable, and is preferably a carbon material. A method of coating the particulate material with a carbon material may be a CVD method using a hydrocarbon gas, such as acetylene or methane, as a raw material. A method of mixing the second particles with coal pitch, petroleum pitch, phenol resin, or the like, followed by heating and carbonizing may be used. Alternatively, carbon black may be allowed to adhere to the surfaces of the secondary particles.

The secondary particles may be washed with an acid. For example, the secondary particles may be washed with an acidic aqueous solution. Washing with an acid can dissolve and remove a very small amount of $Li_2SiO_3$ or other components which may have been produced in the process of forming a composite material of a raw material silicon and the lithium silicate. As the acidic aqueous solution, an aqueous solution of an inorganic acid, such as hydrochloric acid, hydrofluoric acid, sulfuric acid, nitric acid, phosphoric acid, and carbonic acid, and an aqueous solution of an organic acid, such as citric acid and acetic acid can be used.

[Method of producing third particles]

As an example of a method of producing third particles, a first method and a second method will be described below. The third particles may be produced by a method other than the production methods described below.

In the first method, first, a raw material silicon and a carbon source are mixed, and using a pulverizer such as a ball mill, the mixture of a raw material silicon and a carbon source is, while being pulverized into finer particles, formed into a composite. An organic solvent may be added to the mixture, to perform wet pulverization. In this process, the raw material silicon is finely pulverized into silicon particles. The silicon particles are dispersed in a matrix of the carbon source.

Examples of the carbon source that can be used include water-soluble resins, such as carboxymethyl cellulose (CMC), hydroxyethyl cellulose, polyacrylates, polyacrylamide, polyvinyl alcohol, polyethylene oxide, and polyvinylpyrrolidone, saccharides, such as cellulose and sucrose, petroleum pitch, coal pitch, and tar, but are not limited thereto.

Examples of the organic solvent that can be used include alcohols, ethers, fatty acids, alkanes, cycloalkanes, silicate esters, and metal alkoxides.

Next, the composite of silicon particles and a carbon source is heated in an inert gas atmosphere (e.g., an atmosphere of argon, nitrogen, etc.) to 700 °C to 1200 °C. By this heating, the carbon source is carbonized into amorphous carbon. Thus, third particles in which the silicon particles are dispersed in a carbon phase containing amorphous carbon are obtained.

In the second method, first, a raw material silicon and a carbon material are mixed, and using a pulverizer such as a ball mill, the mixture of a raw material silicon and a carbon material is, while being pulverized into fine particles, formed into a composite. An organic solvent may be added to the mixture, to perform wet pulverization. In this process, the raw material silicon is finely pulverized into silicon particles. The silicon particles are dispersed in a matrix of the carbon material.

Forming a raw material silicon and a carbon material into a composite as described above can give third particles in which silicon particles are dispersed in the carbon phase of amorphous carbon. The third particles may then be heated to 700 °C to 1200 °C in an inert gas atmosphere.

As the carbon material, amorphous carbon is preferably used, and graphitizable carbon (soft carbon), non-graphitizable carbon (hard carbon), carbon black, and the like can be used. Examples of the carbon black include acetylene black and Ketjen black. Even when graphite is used as the carbon material, most of the crystal structure of the graphite is lost in obtaining a composite material of silicon particles and carbon material using a pulverizer, and a carbon phase of amorphous carbon is formed.

Examples of the binder include fluorocarbon resins, polyolefin resins, polyamide resins, polyimide resins, vinyl

resins, styrene-butadiene copolymer rubber (SBR), polyacrylic acid, and derivatives thereof. Examples of the conductive agent include carbon black, conductive fibers, fluorinated carbon, and organic conductive materials. Examples of the thickener include carboxymethylcellulose (CMC), and polyvinyl alcohol. For these components, one kind of material may be used singly, or two or more kinds of materials may be used in combination.

[Positive electrode]

The positive electrode includes a positive electrode mixture. Typically, the positive electrode includes a positive electrode current collector, and a positive electrode active material layer (positive electrode mixture layer) formed on a surface of the positive electrode current collector. The positive electrode active material layer contains a positive electrode active material and a bromine compound (B), and contains, as necessary, other components other than the positive electrode active material and bromine compound (B). Examples of other components include a binder, a conductive agent, and a thickener. For these other components, known components used in a secondary battery may be used.

The positive electrode active material layer can be formed by applying a positive electrode slurry of a positive electrode mixture dispersed in a dispersion medium onto a surface of the positive electrode current collector, to form an applied film, and then, drying the applied film. The dry applied film may be rolled as necessary.

The positive electrode active material layer is formed such that, when the positive electrode active material layer is divided into a first region on the positive electrode current collector side and a second region on the positive electrode surface side so as to have the same thickness, the content of the bromine compound (B) in the first region is higher than that in the second region. Such a positive electrode active material layer can be realized by, for example, applying a positive electrode slurry dividedly a plurality of times, using two or more kinds of positive electrode slurries differing in the mixing ratio of the bromine compound (B). By varying the content of the bromine compound (B) in the thickness direction of the positive electrode active material layer such that the content of the bromine compound (B) is reduced as closer to the positive electrode surface, the deterioration in cycle characteristics at low temperatures can be suppressed even when the bromine compound (B) is added to the positive electrode active material layer.

As the positive electrode active material, a lithium composite metal oxide can be used. Examples of the lithium composite metal oxide include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiGPO_4$, and $Li_2GPO_4F$. Here, M is at least one selected from the group consisting of Na, Mg, Sc, Y, Mn, Fe, Co, Ni, Cu, Zn, Al, Cr, Pb, Sb, and B. G includes at least a transition element (e.g., includes at least one selected from the group consisting of Mn, Fe, Co, and Ni). Here, $0 \leq a \leq 1.2$, $0 \leq b \leq 0.9$, and $2.0 \leq c \leq 2.3$. Note that the value a representing the molar ratio of lithium increases or decreases during charging and discharging.

Examples of the binder and the conductive agent that can be used include those exemplified for the negative electrode. As the conductive agent, graphite, such as natural graphite and artificial graphite, may be used.

The form and the thickness of the positive electrode current collector may be respectively selected from the forms and the ranges corresponding to those of the negative electrode current collector. The material of the positive electrode current collector may be, for example, stainless steel, aluminum, an aluminum alloy, titanium, and the like.

[Electrolyte]

As the electrolyte, a liquid electrolyte containing a solvent and a solute dissolved in the solvent can be used. The solute is an electrolyte salt that ionically dissociates in the liquid electrolyte. The solute can include, for example, a lithium salt. The components of the liquid electrolyte other than the solvent and the solutes are additives. The liquid electrolyte can contain various additives.

The solvent may be a nonaqueous solvent. As the nonaqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL) and $\gamma$-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

Other examples of the nonaqueous solvent include cyclic ethers, chain ethers, nitriles such as acetonitrile, and amides such as dimethylformamide.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiPF_2O_2$, $LiBF_4$, $LiSbF_6$, $LiAsF_6$, $LiCF_3SO_3$, $LiCF_3CO_2$), a lithium salt of a fluorine-containing acid imide (e.g., $LiN(FSO_2)_2$, $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). The lithium salt may be used singly or in combination of two or more kinds.

The concentration of the lithium salt in the liquid electrolyte may be 1 mol/liter or more and 2 mol/liter or less,

and may be 1 mol/liter or more and 1.5 mol/liter or less. When the concentration of the lithium salt is controlled within the above range, a liquid electrolyte having excellent ionic conductivity and moderate viscosity can be obtained. The concentration of the lithium salt, however, is not limited to the above.

The liquid electrolyte may contain one or more known additives. Examples of the additive include 1,3-propanesultone, methylbenzene sulfonate, cyclohexylbenzene, biphenyl, diphenyl ether, and fluorobenzene.

[Separator]

A separator may be disposed between the positive electrode and the negative electrode. For the separator, a member which is excellent in ion permeability and has moderate mechanical strength and electrically insulating properties can be adopted. As the separator, a microporous thin film, a woven fabric, a nonwoven fabric, and the like can be used. As the material of the separator, polyolefin, such as polypropylene or polyethylene, is preferred.

An example of the secondary battery (S) includes an outer body, and an electrode group and a nonaqueous electrolyte which are housed in the outer body. The structure of the electrode group is not limited. An example of the electrode group is formed by winding a positive electrode, a negative electrode, and a separator, with the separator disposed between the positive electrode and the negative electrode. Another example of the electrode group is formed by stacking a positive electrode, a negative electrode, and a separator, with the separator disposed between the positive electrode and the negative electrode. The secondary battery (S) may be of any type, such as cylindrical, prismatic, coin, button, and laminate types.

The production method of the secondary battery (S) is not limited, and a known production method may be adopted, or a known production method may be at least partially modified and adopted.

An exemplary embodiment according to the present disclosure will be specifically described below with reference to the drawings. The above-described constituent elements can be used as constituent elements of the example described below. The example described below can be modified based on the above descriptions. The matters described below may be applied to the above-described embodiment. In the embodiment described below, constituent elements that are not essential to the secondary battery according to the present disclosure may be omitted.

FIG. 1 is a partially cut-away schematic oblique view of a prismatic secondary battery according to an embodiment of the present disclosure. The secondary battery 1 illustrated in FIG. 1 includes a bottomed prismatic battery case 11, and an electrode group 10 and an electrolyte (not shown) which are housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core.

To the negative electrode current collector of the negative electrode, a negative electrode lead 15 is attached at its one end, by means of welding or the like. To the positive electrode current collector of the positive electrode, a positive electrode lead 14 is attached at its one end, by means of welding or the like. The negative electrode lead 15 is electrically connected at its other end to a negative electrode terminal 13 provided at a sealing plate 12. A gasket 16 is disposed between the sealing plate 12 and the negative electrode terminal 13, providing electrical insulation therebetween. The positive electrode lead 14 is connected at its other end to the sealing plate 12, and electrically connected to the battery case 11 serving as a positive electrode terminal. On top of the electrode group 10, a resin frame 18 is disposed. The frame 18 separates the electrode group 10 from the sealing plate 12 and separates the negative electrode lead 15 from the battery case 11. The opening of the battery case 11 is sealed with the sealing plate 12. A liquid inlet 17a is formed in the sealing plate 12. The electrolyte is injected into the battery case 11 through the liquid inlet 17a. Thereafter, the liquid inlet 17a is closed with a sealing plug 17.

[Examples]

The secondary battery according to the present disclosure will be more specifically described below by way of Examples. The present disclosure, however, is not limited to the following Examples.

In the Examples, a plurality of kinds of secondary batteries were produced and evaluated in the following procedure. The plurality of kinds of secondary batteries included a positive electrode which was the above-described electrode for a secondary battery containing a bromine compound (B), and differed in the content of the bromine compound (B) in the positive electrode active material layer and/or the distribution of the bromine compound (B) in the thickness direction.

[Production of negative electrode]

Graphite was used as a negative electrode active material. First, the negative electrode active material, sodium carboxymethyl cellulose (CMC-Na), styrene-butadiene rubber (SBR), and water were mixed at a predetermined mass

ratio, to prepare a negative electrode slurry. Next, the negative electrode slurry was applied onto a surface of a copper foil (negative electrode current collector), to form an applied film. The applied film was dried, and then, rolled. In this way, a negative electrode mixture layer was formed on each of both surfaces of the copper foil.

[Production of positive electrode]

$LiNi_{0.88}Co_{0.09}Al_{0.03}O_2$ was used as a positive electrode active material. The positive electrode active material, polyvinylidene fluoride, N-methyl-2-pyrrolidone (NMP), acetylene black, and, as necessary, ethylene-1,2-bispentabromophenyl (SAYTEX (registered trademark)-8010 available from Albemarle Japan Cooperation) as a bromine compound (B) were mixed in a predetermined mass ratio, to prepare a first positive electrode slurry.

Next, the above positive electrode active material, polyvinylidene fluoride, N-methyl-2-pyrrolidone (NMP), acetylene black, and, as necessary, ethylene-1,2-bispentabromophenyl (SAYTEX (registered trademark)-8010 available from Albemarle Japan Cooperation) as a bromine compound (B) were mixed in a predetermined mass ratio, to prepare a second positive electrode slurry.

The first positive electrode slurry was applied onto a surface of an aluminum foil (positive electrode current collector), to form an applied film, and then dried, to form a first layer of a positive electrode active material layer. Subsequently, the second positive electrode slurry was applied onto the first layer, to form an applied film, and then dried, to form a second layer of the positive electrode active material layer. The applied amounts of the first positive electrode slurry and the second positive electrode slurry were set such that the total mass of the positive electrode active material in the first layer was the same as the total mass of the positive electrode active material in the second layer.

Then, the positive electrode active material layer was rolled. A positive electrode in which a positive electrode active material layer having two layers, a first layer (lower layer) and a second layer (upper layer), was formed on each of both surfaces of the aluminum foil was thus obtained.

[Preparation of liquid electrolyte]

$LiPF_6$ was added as a lithium salt to a mixed solvent containing ethylene carbonate (EC) and ethyl methyl carbonate (EMC) in volume ratio of 3:7, to prepare a liquid electrolyte. The concentration of $LiPF_6$ in the nonaqueous liquid electrolyte was set to 1.3 mol/liter.

[Production of secondary battery]

A lead tab was attached to each of the electrodes. Next, the positive electrode and negative electrode were spirally wound with a separator therebetween such that the leads were placed on the outermost layers. In this way, an electrode group was formed. Next, the electrode group was inserted into an outer body made of a laminated film including an aluminum foil as a barrier layer, and dried under vacuum. Next, the nonaqueous liquid electrolyte was injected into the outer body, and the opening of the outer body was sealed. In this way, a secondary battery was obtained.

In the Examples, a plurality of kinds of secondary batteries (batteries A1 to A8 and B1 to B4) were produced, with variations in the content $X_1$ of the bromine compound (B) in the first layer and in the content $X_2$ of the bromine compound (B) in the second layer. The content $X_1$ of the bromine compound (B) in the first layer was varied by changing the bromine compound (B) mixing ratio in the preparation of a first positive electrode slurry. The content $X_2$ of the bromine compound (B) in the second layer was varied by changing the bromine compound (B) mixing ratio in the preparation of a second positive electrode slurry.

The produced secondary batteries were subjected to the following evaluation.

(1) Measurement of capacity retention rate

The discharge capacity of each of the produced secondary batteries was measured as follows. First, in a 10 °C environment, the battery was charged at a constant current of 0.5C until the battery voltage reached 4.2V, and then, continued to be charged at a constant voltage until the current value reached 0.02C. After the charged battery was left to stand for 20 minutes, the battery was discharged at a constant current of 0.5C until the battery voltage reached 2.5 V. The battery was then left to stand for 20 minutes. This operation (charge-discharge cycle) was repeated 50 times.

With the discharge capacity at the first discharge taken as an initial capacity DC0, the discharge capacity DC1 after 50 cycles of the above charge-discharge cycles was measured. Then, a capacity retention rate was calculated from the following equation.

$$\text{Capacity retention rate (\%)} = 100 \times DC1 / DC0$$

The evaluation results are shown in Table 1. In Table 1, the content $X_1$ of the bromine compound (B) in the first layer, the content $X_2$ of the bromine compound (B) in the second layer, the ratio ($X_2/X_1$) of the content $X_2$ to $X_1$, and the content (($X_1+X_2$)/2) of the bromine compound (B) in the whole positive electrode active material layer are also shown. In Table 1, the contents $X_1$ and $X_2$ are expressed as parts by mass relative to 100 parts by mass of the positive electrode active material. In the present Examples, since the thickness of the first layer is approximately the same as the thickness of the second layer, the contents $X_1$ and $X_2$, respectively, become approximately the same as the contents $A_1$ and $A_2$ when the whole positive electrode active material layer is divided into a first region and a second region having the same thickness.

The batteries B1 to B4 are of Comparative Examples, and the content of the bromine compound (B) was not varied between the first layer and the second layer ($X_1 = X_2$). In the battery B1, the first layer and the second layer both contained no bromine compound (B) ($X_1 = X_2 = 0$). In the batteries B2 to B4, as compared to in the battery B1, the capacity retention rate was improved by the addition of the bromine compound (B). The capacity retention rate, however, was 75% or less, which was a small improvement.

In contrast, in the batteries A1 to A8, the content $X_1$ of the bromine compound (B) in the first layer was set higher than the content $X_2$ of the bromine compound (B) in the second layer. ($X_1 > X_2$). In this case, the capacity retention rate was maintained at as high as 82% or more. In the batteries A5 to A8, the second layer contained no bromine compound (B) ($X_2 = 0$). In this case, the capacity retention rate was 87% or more, showing remarkable improvement in cycle characteristics.

[Table 1]

| battery | content of bromine compound | | | | capacity retention rate / [%] |
|---|---|---|---|---|---|
| | lower layer side $X_1$ | upper layer side $X_2$ | content ratio $X_2/X_1$ | average content $(X_2+X_1)/2$ | |
| A1 | 0.2 | 0.1 | 0.5 | 0.15 | 82 |
| A2 | 0.5 | 0.2 | 0.4 | 0.35 | 83 |
| A3 | 1.0 | 0.5 | 0.5 | 0.75 | 86 |
| A4 | 2.0 | 1.0 | 0.5 | 1.5 | 86 |
| A5 | 0.2 | 0 | 0 | 0.1 | 87 |
| A6 | 1.0 | 0 | 0 | 0.5 | 88 |
| A7 | 1.5 | 0 | 0 | 0.75 | 88 |
| A8 | 3.0 | 0 | 0 | 1.5 | 90 |
| B1 | 0 | 0 | - | 0 | 70 |
| B2 | 0.1 | 0.1 | 1.0 | 0.1 | 74 |
| B3 | 0.5 | 0.5 | 1.0 | 0.5 | 74 |
| B4 | 1.0 | 1.0 | 1.0 | 1.0 | 75 |

[Industrial Applicability]

The present disclosure is applicable to a secondary battery, but the application is not limited thereto.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: nonaqueous electrolyte secondary battery, 10: electrode group, 11: battery case, 12: sealing plate, 13: negative electrode terminal, 14: positive electrode lead, 15: negative electrode lead, 16: gasket, 17: sealing plug, 17a: liquid inlet, 18: frame

## Claims

1. An electrode for a secondary battery, comprising:

   a current collector; and
   an active material layer disposed on a surface of the current collector, wherein
   the active material layer includes at least an active material and an organic compound containing bromine, and when the active material layer is divided into a first region and a second region having the same thickness, and the first region is closer to the current collector than the second region, a content $A_1$ by mass of the organic compound relative to the active material in the first region is larger than a content $A_2$ by mass of the organic compound relative to the active material in the second region.

2. The electrode for a secondary battery according to claim 1, wherein the content $A_2$ by mass of the organic compound relative to the active material in the second region is 0.5 times or less as large as the content $A_1$ by mass of the organic compound relative to the active material in the first region.

3. The electrode for a secondary battery according to claim 1 or 2, wherein the organic compound is not contained in a region to a depth of at least 1/4 of the active material layer from a surface not facing the current collector of the active material layer.

4. The electrode for a secondary battery according to any one of claims 1 to 3, wherein when a mass ratio between the active material and the organic compound in the active material layer is expressed as the active material: the organic compound = 100 : a, the a is 0.1 or more and 1.5 or less.

5. The electrode for a secondary battery according to any one of claims 1 to 4, wherein

   the organic compound includes a cyclic structure bonded with a bromine atom, and
   a bromine atom proportion in the organic compound is 45 mass% or more.

6. The electrode for a secondary battery according to any one of claims 1 to 5, wherein the organic compound is at least one selected from the group consisting of ethylene-1,2-bispentabromophenyl, ethylenebistetrabromophthalimide, tetrabromobisphenol A, hexabromocyclododecane, and 2,4,6-tribromophenol.

7. A secondary battery, comprising:

   a first electrode which is the electrode for a secondary battery of any one of claims 1 to 6;
   a second electrode; and
   a separator interposed between the first electrode and the second electrode.

FIG. 1

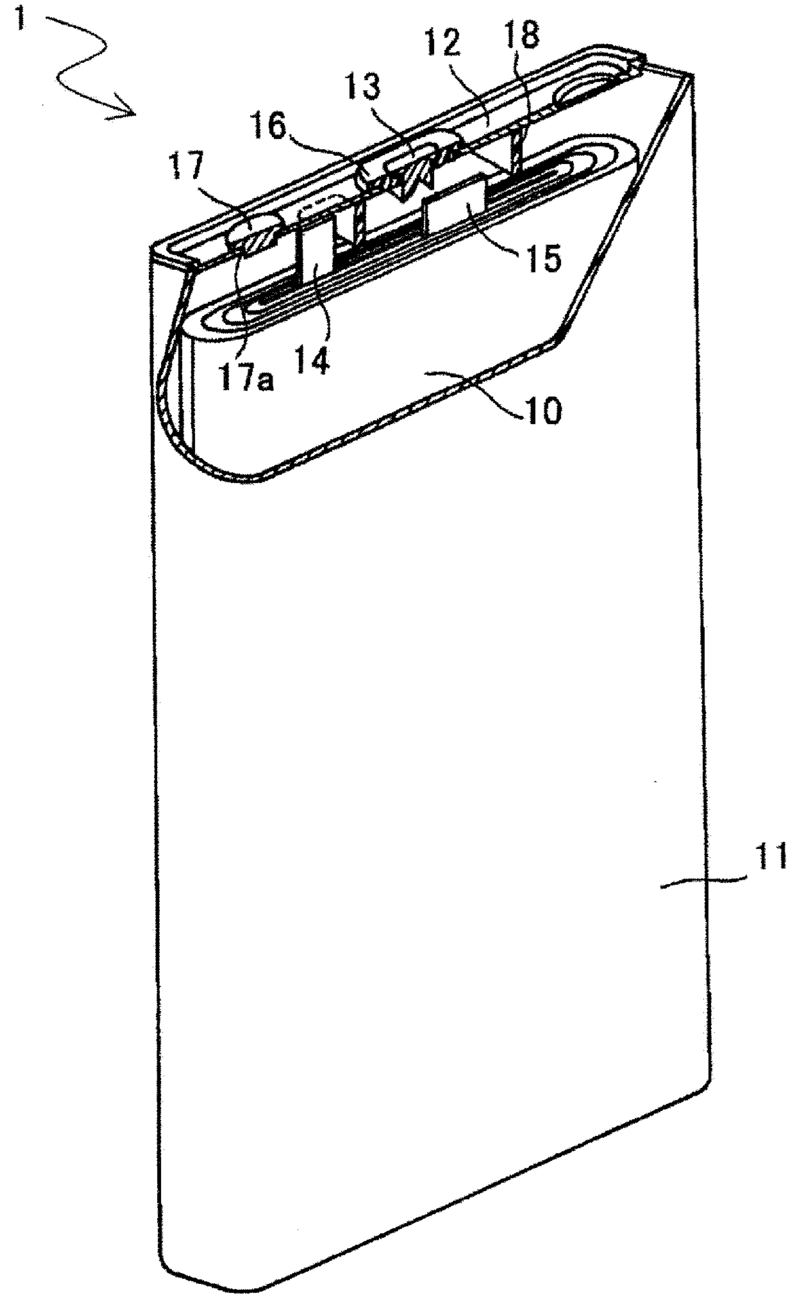

## INTERNATIONAL SEARCH REPORT

International application No.
**PCT/JP2022/034671**

**A. CLASSIFICATION OF SUBJECT MATTER**

***H01M 4/13***(2010.01)i; ***H01M 4/62***(2006.01)i
FI: H01M4/13; H01M4/62 Z

According to International Patent Classification (IPC) or to both national classification and IPC

**B. FIELDS SEARCHED**

Minimum documentation searched (classification system followed by classification symbols)

H01M4/13; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-64715 A (TOYOTA MOTOR CORP.) 26 March 2009 (2009-03-26) claims, paragraphs [0006]-[0013], [0024], [0028], [0034], [0055]-[0058], [0082]-[0095] | 1-7 |
| Y | JP 2000-58068 A (SANYO ELECTRIC CO., LTD.) 25 February 2000 (2000-02-25) paragraphs [0007], [0011] | 1-7 |
| A | WO 2013/035721 A1 (NTT FACILITIES, INC.) 14 March 2013 (2013-03-14) entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2022** | **22 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/034671**

| Patent document cited in search report | Publication date (day/month/year) | Patent family member(s) | Publication date (day/month/year) |
|---|---|---|---|
| JP 2009-64715 A | 26 March 2009 | (Family: none) | |
| JP 2000-58068 A | 25 February 2000 | (Family: none) | |
| WO 2013/035721 A1 | 14 March 2013 | JP 2013-54968 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000058068 A
- JP 2009064715 A
- WO 2018179969 A